# EUROPEAN PATENT APPLICATION

(11) **EP 4 099 277 A1**
(43) Date of publication of application: **07.12.2022**
(21) Application number: 22175343.7
(22) Date of filing: 25.05.2022
(51) Int. Cl.: G06V 20/58

(54) **INFORMATION PROCESSING METHOD, STORAGE MEDIUM, AND INFORMATION PROCESSING APPARATUS**

(30) Priority: 03.06.2021 JP 2021093690
(71) Applicant: Kubota, Nozomu, Minato-ku, Tokyo 108-0075 (JP)
(72) Inventor: Kubota, Nozomu, Minato-ku, Tokyo 108-0075 (JP)
(74) Representative: EIP

(57) **Abstract**

An anomaly of a subject can be properly determined even in false image recognition of the subject. An information processing method, performed by at least one processor in an information processing apparatus, comprises acquiring an image including a subject from an imaging apparatus; acquiring respectively items of data from a plurality of sensors provided for the subject or an object near the subject, the items of data being sensed respectively by the plurality of sensors; acquiring a determination result on whether the subject is abnormal or not by inputting the items of data acquired from the plurality of sensors to a learning model utilizing a neural network, wherein the learning model has learned presence or absence of an anomaly in the subject by using respectively past items of data from the plurality of sensors as learning data; and determining whether a recognition result of the subject based on the image is abnormal or not by using the determination result.

## Description

### Background

### Field

The present invention relates to an information processing method, a storage medium, and an information processing apparatus.

### Description of Related Art

Techniques for avoiding accidents by autonomous vehicles have been actively studied in recent years. In a known technique, for example, the driving level of a processor and the driving level of a human driver are compared with each other to allow either the processor or the human driver at a higher driving level to drive a vehicle (for example, U.S. Patent No. 9566986).

### Citation List

### Patent Document

Patent Document: U.S. Patent No. 9566986

### Summary

However, an automatic vehicle-control system controls automatic driving by using subjects (including a sign and a signal) recognized based on images captured by an imaging apparatus. Thus, if automatic driving is controlled on the assumption that subjects recognized in images are true as in the conventional art, false recognition of a subject in image recognition may cause a serious accident. For example, in an attack called one-pixel attack that has been recently pointed out (Jiawei Su, Danilo Vasconcellos Vargas, Sakurai Kouichi, "One-pixel attack for fooling deep neural networks," IEEE Transactions on Evolutionary Computation, Vol.23, Issue.5, pp. 828--841. Publisher: IEEE. 2019), even a change of only one pixel can cause a neural network to falsely recognize an image and feed back a specific result. For a subject falsely recognized by such an attack, i.e.,, green light falsely recognized as red light, measures for determining false recognition as an anomaly are required.

Hence, the present invention provides an information processing method, a program, and an information processing apparatus that can properly determine an anomaly of a subject even if an image of the subject is falsely recognized by being attacked, for example.

An information processing method according to an aspect of the present invention causes a processor in an information processing apparatus, comprising:
acquiring an image including a subject from an imaging apparatus;
acquiring respectively items of data from a plurality of sensors provided for the subject or an object near the subject, the items of data being sensed respectively by the plurality of sensors;
acquiring a determination result on whether the subject is abnormal or not by inputting the items of data acquired from the plurality of sensors to a learning model utilizing a neural network, wherein the learning model has learned presence or absence of an anomaly in the subject by using respectively past items of data from the plurality of sensors as learning data; and
determining whether a recognition result of the subject based on the image is abnormal or not by using the determination result..

The present invention can provide an information processing method, a storage medium, and an information processing apparatus that can properly determine an anomaly of an object even in false image recognition of the subject.

### Brief Description of Drawings

FIG. 1 illustrates an example of an information processing system according to an embodiment of the present invention;
FIG. 2 illustrates an example of the processing block of an information processing apparatus according to the present embodiment;
FIG. 3 illustrates an example of the physical configuration of the information processing apparatus according to the present embodiment;
FIG. 4 illustrates a data example used for determining an anomaly according to example 1;
FIG. 5 is a sequence diagram indicating an example of determination by an information processing system 1 according to example 1; and
FIG. 6 illustrates a data example used for determining an anomaly according to example 2.

### Detailed Description

An embodiment of the present invention will be described below with reference to the accompanying drawings. In the drawings, constituent elements indicated by the same reference numerals have the same or similar configurations.

### System Outline

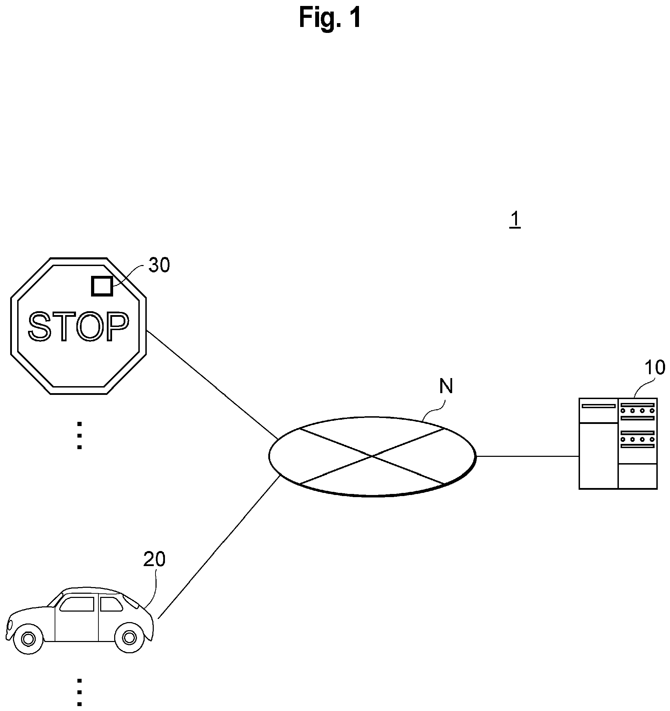

FIG. 1 illustrates an example of an information processing system 1 according to an embodiment of the present invention. The information processing system 1 in FIG. 1 includes an information processing apparatus 10, a vehicle 20 including an imaging apparatus, and an object provided with a sensor 30, enabling mutual data communications via a network N.

The information processing apparatus 10 in FIG. 1 is, for example, a server connected to any humans or any objects via a network. For example, the information processing apparatus 10 is connected to the vehicle 20 capable of automatic driving at an automatic driving level of 3 or higher and acquires an image captured by an imaging apparatus, e.g., a camera installed in the vehicle 20. Moreover, the information processing apparatus 10 acquires data sensed from the sensors 30 provided for objects around the vehicle 20, for example, a signal, a road, and a pedestrian. The vehicle 20 includes a processor for controlling driving, for example, an apparatus for recognizing an image captured by the imaging apparatus.

The information processing apparatus 10 identifies a subject in an acquired image by using an image recognition model, e.g., a convolutional neural network (CNN). In this case, the information processing apparatus 10 acquires data sensed from the sensor 30 provided for a subject to be recognized or the sensors 30 provided for objects near the subject, for example, a planimetric feature, the vehicle 20, and a human. The sensors 30 may include a sensor of five senses including at least one of seeing, hearing, tasting, smelling, and touching. The sensors 30 provided for humans may include a brain wave sensor for sensing brain waves in addition to the five-sense sensor.

For example, if a road sign is a subject to be recognized, the road sign is provided with at least one of a visual sensor (an imaging apparatus like a camera), a hearing sensor (e.g., a microphone for collecting sound data), a taste sensor, a smell sensor, and a touch sensor. The information processing apparatus 10 is caused to learn data sensed from the sensor 30 and output a result of determination on whether the acquired data is normal or not by using a learned learning model. If the learning model includes a neural network, the information processing apparatus 10 may update the parameter of the neural network according to error back-propagation and correct the learning model so as to output a proper determination result.

For example, in the case of a bent road sign, an anomaly can be determined by a change of an image of the road sign or a sound of bending, by using a visual sensor or a hearing sensor. In the case of a road sign subjected to spraying, an anomaly can be determined by using a taste sensor, a smell sensor, a hearing sensor, or a touch sensor.

The information processing apparatus 10 determines the presence or absence of an anomaly in the recognition result by using data acquired from the sensor 30. For example, the information processing apparatus 10 performs majority decision on data from the sensors 30 by using anomaly determination results. Thus, even when a subject is falsely recognized by using an image of a road sign subjected to any attack, other sensors 30 indicate anomalies, enabling the detection of false recognition of the subject.

Thus, when an automatic vehicle-control system including the information processing apparatus 10 controls the driving of the vehicle 20, in the event of false recognition of a subject, e.g., a signal or a road sign, an anomaly is determined by using data outputted from the sensors provided for the subject or the like. This can detect a change of the subject and thus detect false image recognition of the subject.

### Example 1

An example of the present invention will be described below. In example 1, a subject to be recognized has one or more sensors 30. The information processing apparatus 10 determines whether the subject to be recognized has been changed (the presence or absence of an anomaly), by using data sensed by the sensor 30.

For example, at a position where a one-pixel attack can be made on a subject to be recognized, a change may become unnoticeable in the appearance of the subject to be recognized. As a result of image recognition based on an image of the subject to be recognized, a different subject may be recognized. In example 1, however, a change (anomaly) of a subject to be recognized is detected by, for example, the sensor 30 provided for the subject to be recognized, thereby detecting the recognition of a subject different from the true subject to be recognized. The determination of an anomaly of a subject to be recognized in example 1 will be specifically described below.

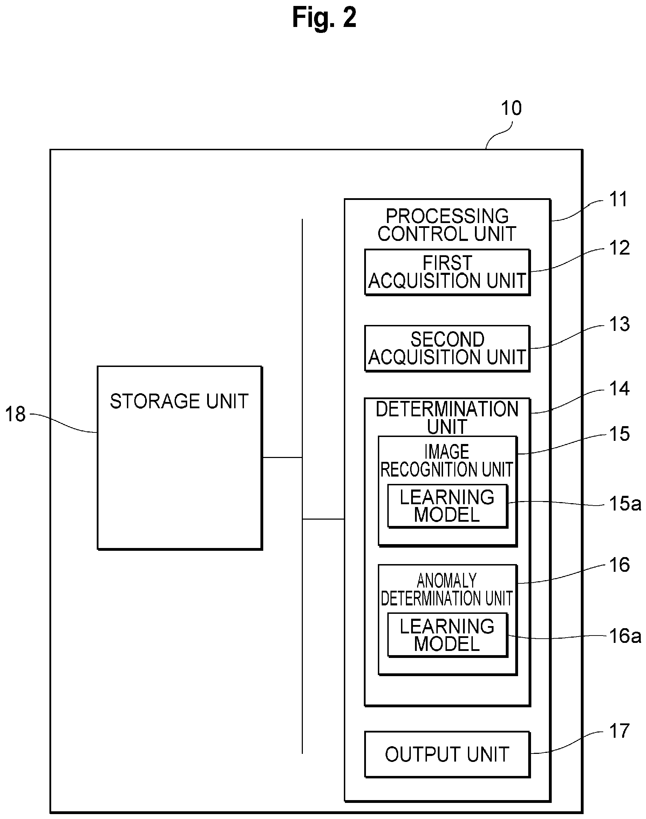

FIG. 2 illustrates an example of the processing block of the information processing apparatus 10 according to the present embodiment. The information processing apparatus 10 includes a processing control unit 11, a first acquisition unit 12, a second acquisition unit 13, a determination unit 14, an image recognition unit 15, a learning model 15a, an anomaly determination unit 16, a learning model 16a, an output unit 17, and a storage unit 18.

The first acquisition unit 12 acquires an image including a subject from an imaging apparatus, e.g., a camera mounted in the vehicle 20. The image transmitted from the imaging apparatus is acquired by the information processing apparatus 10 via a network and is stored in the storage unit 18. For example, the first acquisition unit 12 sequentially acquires images from the storage unit 18, the images being outputted from the imaging apparatus with predetermined timing. The image includes the external part of the vehicle 20, for example, the front part of the vehicle and one or more planimetric features.

From the one or more sensors 30 provided for the subject included in the acquired image or an object provided near the subject, the second acquisition unit 13 acquires data sensed by the sensors 30. As described above, the sensor is at least one of a visual sensor, a hearing sensor, a taste sensor, a smell sensor, and a touch sensor that are included in, for example, a five-sense sensor. Moreover, the sensor 30 is provided for a planimetric feature, e.g., a road sign, a signal, or a carriageway marking. False recognition of such a planimetric feature may cause a serious impact during the driving control of automatic driving. The sensor 30 may be a sensor to be attached to a pedestrian, e.g., a brain wave sensor or a five-sense sensor.

Data sensed from the sensor 30 (also referred to as "sensor data") is acquired by the information processing apparatus 10 from the sensor 30 via the network and is stored in the storage unit 18. For example, the second acquisition unit 13 acquires sensor data, which is outputted from the sensor with predetermined timing, from the storage unit 18.

The determination unit 14 determines whether the recognition result of a subject based on an acquired image is abnormal or not, by using the acquired data. For example, the determination unit 14 includes the image recognition unit 15 for recognizing a subject from the acquired image and an anomaly determination unit 16 for determining whether the subject to be recognized is abnormal or not.

The image recognition unit 15 recognizes an object in the acquired image. A subject in the image is recognized by using, for example, the learning model 15a through the CNN. The learning model 15a is not particularly limited and may be any learning model capable of detecting and recognizing an object by using an image (an inference algorithm including a parameter).

The anomaly determination unit 16 determines whether the subject to be recognized is abnormal or not, by using the sensor data acquired from the sensor 30. The anomaly determination unit 16 may determine an anomaly, for example, when at least a predetermined number of items of sensor data exceed a predetermined threshold value.

In the case of a visual sensor, an anomaly is determined if a scene to be imaged is considerably different due to a displacement or bending of a subject to be recognized. In the case of a hearing sensor, an anomaly is determined if the sensor detects a sound of a strike to a subject to be recognized or a sound of spraying onto the subject. In the case of a taste sensor, an anomaly is determined if the sensor detects a change of a chemical amount. The chemical amount is changed by, for example, a spray of paint to a subject to be recognized. In the case of a smell sensor, an anomaly is determined if the sensor detects, for example, a smell of a predetermined object added to a subject to be recognized. In the case of a touch sensor, an anomaly is determined if the sensor detects a change of a pressure or vibrations on the contact surface of a subject to be recognized. The pressure and vibrations are changed by, for example, a spray of paint to the subject to be recognized.

The anomaly determination unit 16 may determine an anomaly by using sensor data acquired from a five-sense sensor or a brain wave sensor that is provided for a pedestrian. For example, if the vehicle 20 including an imaging apparatus for acquiring an image travels dangerously due to false recognition of a subject to be recognized, a pedestrian around the vehicle 20 may shout or be surprised with an increased heart rate at the sight of the vehicle 20, leading to a change of a biological signal. The sensor provided for a pedestrian transmits a biological signal, e.g., a brain wave signal or a voice signal to the information processing apparatus 10, allowing the anomaly determination unit 16 to determine an anomaly by using a change of the biological signal of the pedestrian. For example, for a pedestrian around a vehicle, the anomaly determination unit 16 may acquire position information on the vehicle 20 and position information on the pedestrian and specify the pedestrian in a predetermined range from the position of the vehicle 20. For example, the brain wave signal includes any one of signals measured by one or more extracellular electrodes such as SUA(Single-Unit Activity), MUA(Multi-Unit Activity) or LFP(Local Field Potential), or any one of signals of EcoG(Electro-Cortico-Gram), EEG(Electro-Encephalo-Gram) and MEG(Magneto-Encephalo-Graphy), or a signal measured by NIRS(Near Infra- Red Spectoroscopy) or fMRI(functional magnetic resonance imaging).

If it is determined that at least a predetermined number of items of the acquired sensor data are abnormal, the anomaly determination unit 16 determines that the subject to be recognized is abnormal.

With this processing, even if false recognition occurs in an image recognition result, an error (anomaly) in the recognition result can be detected by using data of other sensors. For example, even if a stop sign near an intersection is tampered and is recognized as another sign by using an image captured by the imaging apparatus installed in the vehicle 20, an anomaly can be determined by using sensor data from at least one sensor provided for the sign. In other words, an anomaly of a subject to be recognized can be properly determined even in false image recognition of the subject.

The output unit 17 may store the result of determination by the determination unit 14 in the storage unit 18, output the result to the outside, and displays the result on a display device.

Alternatively, the anomaly determination unit 16 may determine whether a subject is abnormal or not by inputting, from among items of sensor data obtained from the sensors 30, corresponding sensor data to each learning model 16a that has learned the presence or absence of an anomaly in the subject by using past sensor data from the sensors 30 as learning data. The learning model 16a may be a learning model suitable for each item of data. For example, the learning model 16a is a model that is generated by performing supervised learning on past sensor data with a correct answer level of the presence or absence of an anomaly and outputs anomaly or normality in response to the input of sensor data.

In this case, the determination unit 14 acquires a determination result outputted from each learning model 16a for each item of sensor data. The determination unit 14 may determine whether the result of recognition by the image recognition unit 15 is abnormal or not, by using determination results. For example, the determination unit 14 may determine an anomaly when a majority of determination results are abnormal, by performing majority decision on the determination result of each item of sensor data.

The foregoing processing can improve the accuracy of determination of a determination result from the sensor data by outputting the determination result by using the learning model for the sensor data. This can more properly determine an anomaly of a subject.

The determination unit 14 may determine whether the result of recognition by the image recognition unit 15 is abnormal or not, by ensemble learning on determination results by the anomaly determination unit 16. For example, the determination unit 14 uses, as ensemble learning, predetermined learning techniques including max voting, weighted average voting, bagging, boosting, and stacking. The learning technique of ensemble learning is not limited to these examples. Any learning technique is applicable as long as predictive ability for unlearned data is improved by combining techniques learned by individual learners.

Moreover, when a learning technique of max voting is used as ensemble learning, the determination unit 14 may use at least one of, for example, logistic regression, a decision tree, a support vector machine, and max voting ensemble as a predetermined model. The predetermined model is not limited to these examples.

When a learning technique of weighted average voting is used as ensemble learning, the determination unit 14 may use at least one of, for example, logistic regression, a decision tree, a support vector machine, and weighted average voting ensemble as a predetermined model. The predetermined model is not limited to these examples.

When a learning technique of bagging is used as ensemble learning, the determination unit 14 may use, for example, a decision tree and a decision tree of bagging ensemble as a predetermined model. The predetermined model is not limited to these examples.

When a learning technique of boosting is used as ensemble learning, the determination unit 14 may use at least one of, for example, logistic regression and a decision tree as a predetermined model. In this case, an algorithm for ensemble learning may be at least one of random forest, AdaBoost, GradientBoosting, Xgboost, lightGBM, and CatBoost. The algorithm is not limited to these examples.

When a learning technique of stacking is used as ensemble learning, the determination unit 14 may use at least one of, for example, logistic regression, a decision tree, a support vector machine, and stacking ensemble as a predetermined model. The predetermined model is not limited to these examples.

According to the foregoing processing, an anomaly of a subject to be recognized is determined by using ensemble learning on sensor data. This can more properly determine an anomaly.

As described above, the imaging apparatus may be installed in the vehicle 20 capable of automatic driving, a subject as a target of image recognition may include a planimetric feature of a road, a signal, or a sign, and an object provided with the sensor may include a planimetric feature, a human, or the vehicle 20.

Thus, the system in example 1 is applicable to an automatic vehicle-control system, thereby contributing to the improvement of safety performance of the automatic vehicle-control system. For example, owned sensors or surrounding sensors enable observations of a subject to be recognized, e.g., a road sign, so that an anomaly in the subject to be recognized can be properly determined.

The first acquisition unit 12 may acquire position information on the vehicle 20 including the imaging apparatus, in addition to images. The second acquisition unit 13 may acquire position information on the sensors 30 in addition to data. The position information may indicate position information on objects provided with the sensors 30.

In this case, the determination unit 14 may include determination on whether the recognition result of a subject to be recognized is abnormal or not, by using data transmitted from the sensor 30 corresponding to position information specified based on position information on the vehicle 20. For example, the determination unit 14 specifies sensors in a predetermined range from the position of the vehicle 20 by using position information on the vehicle 20 and position information on the sensors 30 and uses data transmitted from the sensors 30.

If identification information (ID) is assigned to specify a planimetric feature (e.g., a road sign) provided with the sensor 30, the sensor 30 may transmit the ID of the planimetric feature along with the position information. In this case, the determination unit 14 specifies the type of a subject to be recognized (types including a road sign, a signal, a carriageway marking, and a guardrail) by using the position information on the vehicle 20 and the category of a subject based on the image recognition result. The determination unit 14 specifies the type of an object (types including a road sign, a signal, a carriageway marking, and a guardrail) provided with the sensor, by using the position information on the sensor and the ID of the sensor.

When the types of a subject to be recognized and an object are specified, the determination unit 14 may associate the subject to be recognized and the object of the corresponding type and determine an anomaly in the recognition result of the subject to be recognized, by using sensor data acquired from the sensor provided for the object associated with the subject to be recognized.

According to the foregoing processing, even if the imaging apparatus moves, the subject to be recognized can be properly specified, and sensor data used for determining an anomaly can be properly specified, so that an anomaly of the subject to be recognized can be properly determined using minimum sensor data.

Furthermore, map data enabling the acquisition of three-dimensional position information with high accuracy has been recently developed. In such map data, planimetric features such as a signal and a road sign are managed as planimetric feature data. Planimetric features around the vehicle 20 can be specified from the position information on the vehicle 20. The determination unit 14 may specify a planimetric feature around the vehicle 20 by using the map data and specify sensor data outputted from the sensor provided for the planimetric feature.

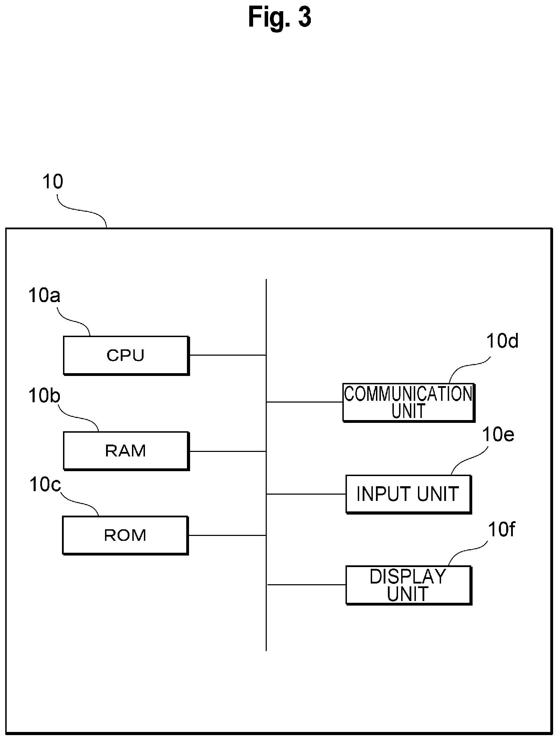

FIG. 3 illustrates an example of the physical configuration of the information processing apparatus 10 according to the present embodiment. The information processing apparatus 10 includes one or a plurality of central processing units (CPU) 10a corresponding to an operation part, a random access memory (RAM) 10b corresponding to a storage unit, a read only memory (ROM) 10c corresponding to a storage unit, a communication unit 10d, an input unit 10e, and a display unit 10f.

The configurations in FIG. 3 are connected to one another via a bus so as to transmit and receive data to and from one another. The present example will describe the information processing apparatus 10 including one computer. The information processing apparatus 10 may be implemented by combining a plurality of computers or a plurality of operation parts. The configurations in FIG. 3 are merely exemplary. The information processing apparatus 10 may include other configurations or may exclude some of the configurations.

The CPU 10a is a control unit that performs control for executing programs stored in the RAM 10b or the ROM 10c and computes or manipulates data. The CPU 10a is, for example, an operation part for performing the processing of the processing control unit 11 illustrated in FIG. 2. The CPU 10a receives various items of data from the input unit 10e and the communication unit 10d, displays the operation result of data on the display unit 10f, and stores the result in the RAM 10b.

The RAM 10b enables rewriting of data in the storage unit and may include, for example, a semiconductor memory. The RAM 10b may store programs to be executed by the CPU 10a and data such as learning data including the performance of the learning model 15a and the learning model 16a in FIG. 2. The programs and the data are merely exemplary. The RAM 10b may store other data or exclude part of the programs and the data.

The ROM 10c enables reading of data in the storage unit and may include, for example, a semiconductor memory. The ROM 10c may store, for example, a predetermined program or data not to be rewritten. The storage unit 18 in FIG. 2 can be implemented by the RAM 10b and/or the ROM 10c.

The communication unit 10d is an interface for connecting the information processing apparatus 10 to other devices. The communication unit 10d may be connected to a communication network, e.g., the Internet.

The input unit 10e receives a data input from a user and may include, for example, a keyboard and a touch panel.

The display unit 10f visually displays an operation result obtained by the CPU 10a and may include, for example, a liquid crystal display (LCD). The display unit 10f may display, for example, an image recognition result or an anomaly determination result.

A determination program for performing the processing of the processing control unit 11 may be provided while being stored in a computer-readable non-transitory storage medium, e.g., the RAM 10b or the ROM 10c. Alternatively, the determination program may be provided via a communication network connected by the communication unit 10d. In the information processing apparatus 10, the determination program executed by the CPU 10a implements various operations described according to FIG. 2. These physical configurations are merely exemplary and are not necessarily independent from one another. For example, the information processing apparatus 10 may include a large-scale integration (LSI) that is a combination of the CPU 10a and the RAM 10b or the ROM 10c. Moreover, the information processing apparatus 10 may include a graphical processing unit (GPU) or an application specific integrated circuit (ASIC).

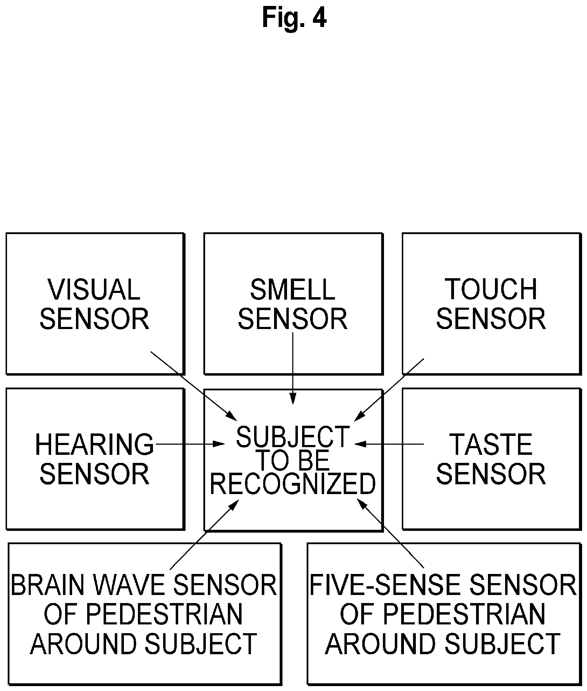

FIG. 4 illustrates a data example used for determining an anomaly according to example 1. In the example of FIG. 4, for a subject to be recognized in an image, an anomaly is determined by using a visual sensor, a smell sensor, a touch sensor, a hearing sensor, a taste sensor, a brain wave sensor of a pedestrian around the subject, or a five-sense sensor.

For example, in an application to the automatic vehicle-control system as described in example 1, the vehicle 20 capable of automatic driving recognizes a subject from a captured image and controls driving based on the recognized subject. In the case of an unnoticeable attack to the subject like the foregoing one-pixel attack, the automatic vehicle-control system falsely recognizes the subject, which may cause a serious accident.

Various objects and humans connected to the Internet in recent years can perform data communications. Thus, an anomaly of the attacked subject is examined from the subject and an object or a human around the subject, so that the anomaly can be properly determined and detected.

In the example of FIG. 4, for a subject to be recognized like a road sign or a signal, an anomaly of the subject to be recognized can be properly determined and detected by using sensor data from a visual sensor, a smell sensor, a touch sensor, a hearing sensor, and a taste sensor that are provided for the subject to be recognized, and a brain wave sensor and a five-sense sensor that are provided for a pedestrian around the subject. The example in FIG. 4 does not intend to use all the sensors in FIG. 4. It is only necessary to use at least one of the sensors.

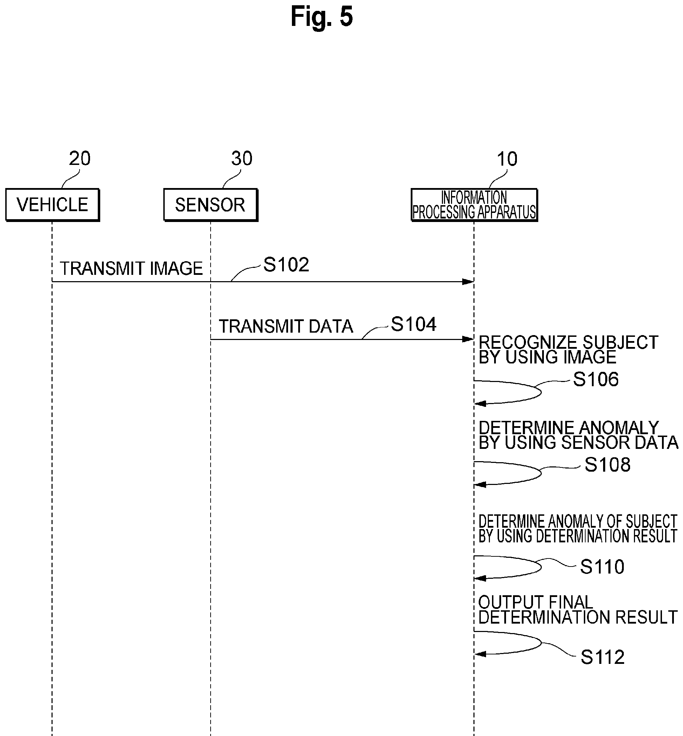

FIG. 5 is a sequence diagram indicating an example of determination by the information processing system 1 according to example 1. In the processing of FIG. 5, the imaging apparatus is installed in the vehicle 20, and the sensor 30 is provided for a planimetric feature, e.g., a road sign. The configuration is not limited to this example.

In step S102, the vehicle 20 transmits an image captured by the imaging apparatus to the information processing apparatus 10 via the network N. The vehicle 20 may transmit position information on the vehicle 20 measured by using a global navigation satellite system (GNSS), in addition to the image.

In step S104, the sensor 30 transmits sensed sensor data to the information processing apparatus 10 via the network N. Sensing data outputted from the sensor 30 may be temporarily acquired by another device and transmitted from the device.

In step S106, the first acquisition unit 12 and the second acquisition unit 13 of the information processing apparatus 10 acquire the image and the sensor data and the determination unit 14 recognizes a subject in the acquired image by using an object recognition technique or the learning model 15a.

In step S108, by using the acquired sensor data, the determination unit 14 of the information processing apparatus 10 determines whether the subject to be recognized in the image is abnormal or not. The sensor data may be first acquired to determine an anomaly regardless of the order of processing in steps S102 to S108.

In step S110, by using the determination result of the sensor data, the determination unit 14 determines whether the subject to be recognized in the image is abnormal or not.

In step S112, the output unit 17 outputs the determination result of the determination unit 14 to the display device or an external device. For example, if the determination unit 14 determines an anomaly, the output unit 17 provides notification about the presence of the anomaly to the subject provided with the sensor 30. Thus, for example, a device installed for the subject that is notified about the anomaly can recognize the presence of the anomaly and send a notice of replacement or removal to the maintenance company of the subject.

According to example 1, an anomaly of a subject to be recognized in image recognition can be determined by using sensor data from the sensor 30 provided for the subject to be recognized or the sensor 30 owned by a pedestrian around the subject.

For the sensor data acquired from the sensor 30 provided for the subject to be recognized, an anomaly may be determined regardless of the acquisition of an image. For example, the anomaly determination unit 16 performs ensemble learning using the sensor data acquired from the sensor 30 and determines an anomaly of the subject to be recognized. At this point, if an anomaly of the subject to be recognized is detected, the occurrence of the anomaly of the subject to be recognized can be notified in advance to the vehicle 20 traveling around the subject to be recognized. For example, the anomaly determination unit 16 provides notification in advance about the anomaly of the subject to be recognized to a device (e.g., a processor) provided for performing image recognition in the vehicle 20. Thus, the unreliable image recognition result of the subject to be recognized can be recognized by the vehicle 20 in advance.

### Example 2

Example 2 of the present invention will be described below. In example 2, an object around a subject to be recognized, e.g., a road sign has one or more sensors 30. The information processing apparatus 10 determines whether the subject to be recognized has been changed (the presence or absence of an anomaly), by using data sensed by the sensors 30. The object is, for example, at least one of the foregoing planimetric features, a human, and a vehicle.

The system configuration of example 2 is similar to that of FIG. 1, the configuration of the information processing apparatus 10 is similar to the configurations of FIGS. 2 and 3, and the steps of the processing of the information processing system 1 are similar to those of FIG. 5. Sensor data used in example 2 is acquired from the sensor 30 provided for an object other than a subject to be recognized, e.g., a planimetric feature around the object.

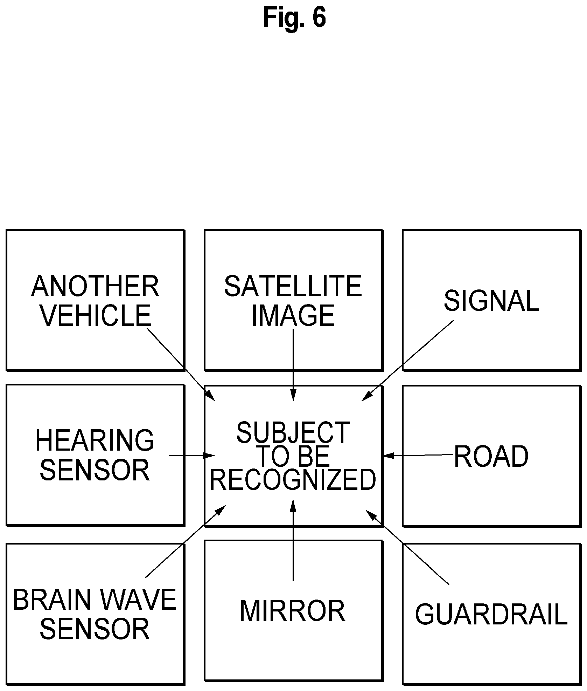

FIG. 6 illustrates a data example used for determining an anomaly according to example 2. In the example of FIG. 6, for a subject to be recognized in an image, an anomaly is determined by using a sensor provided for another vehicle 20, a satellite image acquired from a satellite, a sensor provided for a signal, a hearing sensor provided for a planimetric feature around the subject, a sensor provided for a road, a brain wave sensor provided for a pedestrian around the subject, a sensor provided for a mirror, and a sensor provided for a guardrail.

In the example of FIG. 6, for a subject to be recognized like a road sign and a signal, an anomaly of the subject to be recognized can be properly determined and detected by using sensor data from the sensors provided around the subject or a satellite image. The example in FIG. 6 does not intend to use all the sensors and the image in FIG. 6. It is only necessary to use at least one of the sensors and the image.

According to example 2, an anomaly of a subject to be recognized can be determined by using sensor data from the sensor 30 provided for an object other than the subject to be recognized, e.g., a planimetric feature around the subject, thereby detecting the anomaly of the subject to be recognized.

The embodiment including examples 1 and 2 is described to enhance understanding of the present invention and does not intend to limit the interpretation of the present invention. The elements, layout, materials, conditions, shape, and size of the embodiment are not limited to those illustrated in the embodiment and can be changed as necessary. Moreover, configurations in different embodiments can be partially replaced or combined.

In the embodiment, the imaging apparatus is installed in the vehicle 20 capable of automatic driving. The imaging apparatus can be installed in an autonomous travelable flight vehicle or a stationary object. In the above embodiment, the above-mentioned sensors may be installed in a moving object such as a vehicle. For example, the sensor may be LiDAR or radar. The abnormality of the subject may be determined based on sensing data from different sensors installed in each moving object, as in the above embodiment. For example, the abnormality of the subject may be determined based on sensing data from different sensors installed in each moving object by performing ensemble learning.

In the embodiment, the sensor 30 transmits position information. Identification information (ID) assigned to the sensor may be transmitted instead. In this case, the storage unit 18 of the information processing apparatus 10 may store position information on the sensor for each ID, and the determination unit 14 may specify position information from the ID of the sensor.

In the embodiment, an anomaly of a tampered subject to be recognized can be detected. In the case of a one-pixel attack to an image of a subject to be recognized, an anomaly is difficult to detect because the subject to be recognized is not tampered. In this case, the weight of data acquired from a sensor provided for a pedestrian around the subject is increased, so that an anomaly can be detected. For example, the weight of sensor data indicating a brain wave signal from a brain wave sensor provided for a pedestrian around the subject and the weight of sensor data from a five-sense sensor are increased, and ensemble learning is performed using a learning technique of weighted average voting, so that an anomaly can be detected. As a result of false recognition of a sign or the like in response to a one-pixel attack to an image, the vehicle 20 travels dangerously, and a pedestrian at the sight of the situation around the vehicle may shout or be surprised, so that an anomaly can be detected from sensor data from the pedestrian. Since a heavy weight is set for the sensor data, an anomaly can be detected even in a one-pixel attack to an image.

The sensor data outputted from the sensor may be managed by using a block chain technique. A block chain is substantially tamper-resistant, thereby preventing tampering on the sensor data outputted from the sensor. This can improve the reliability of the system.

### Appendix

### Appendix 1

A computer-readable non-transitory storage medium for storing a program,
the program causing one or a plurality of processors in an information processing apparatus to execute:
acquiring an image including a subject from an imaging apparatus;
acquiring respectively items of data from one or a plurality of sensors provided for the subject or an object near the subject, the items of data being sensed respectively by the one or a plurality of sensors;
acquiring a determination result on whether the subject is abnormal or not by inputting, from among items of data acquired from the sensors, corresponding data to each learning model that has learned presence or absence of an anomaly in the subject by using respectively past items of data from the sensors as learning data; and
determining whether a recognition result of the subject based on the image is abnormal or not by using the determination result.

### Appendix 2

A computer-readable non-transitory storage medium for storing a program,
the program causing one or a plurality of processors in an information processing apparatus to execute:
acquiring an image including a subject from an imaging apparatus installed in a vehicle capable of automatic driving, the subject including a planimetric feature of a road, a signal, or a sign;
acquiring respectively items of data from one or a plurality of sensors provided for the subject or an object near the subject, the items of data being sensed respectively by the one or a plurality of sensors, the object including a planimetric feature, a human, or a vehicle; and
determining whether a recognition result of the subject based on the image is abnormal or not by using respectively the items of data.

### Appendix 3

An information processing method comprising, by one or a plurality of processors in an information processing apparatus:
acquiring respectively items of data from one or a plurality of sensors provided for a predetermined subject or an object near the predetermined subject, the items of data being sensed respectively by the one or a plurality of sensors;
determining whether the predetermined subject is abnormal or not by using the items of data, and
providing notification about an anomaly of the predetermined subject to a device for image recognition processing on the predetermined subject when the predetermined subject is abnormal.

### Appendix 4

The information processing method according to appendix 3, wherein the device is provided for a vehicle capable of automatic driving.

### Appendix 5

The information processing method according to appendix 4, wherein the providing notification includes providing notification about the anomaly before the predetermined subject is recognized from an image captured by an imaging apparatus installed in the vehicle.

### Appendix 6

A computer-readable non-transitory storage medium for storing a program,
the program causing one or a plurality of processors in an information processing apparatus to execute:
acquiring respectively items of data from one or a plurality of sensors provided for a predetermined subject or an object near the predetermined subject, the items of data being sensed respectively by the one or a plurality of sensors;
determining whether the predetermined subject is abnormal or not by using the items of data, and
providing notification about an anomaly of the predetermined subject to a device for image recognition processing on the predetermined subject when the predetermined subject is abnormal.

### Appendix 7

An information processing apparatus including one or a plurality of processors,
the one or a plurality of processors executing:
acquiring respectively items of data from one or a plurality of sensors provided for a predetermined subject or an object near the predetermined subject, the items of data being sensed respectively by the one or a plurality of sensors;
determining whether the predetermined subject is abnormal or not by using the items of data; and
providing notification about an anomaly of the predetermined subject to a device for image recognition processing on the predetermined subject when the predetermined subject is abnormal.

Appendix 8. An information processing method, performed by at least one processor in an information processing apparatus, comprising:
acquiring an image including a subject from an imaging apparatus installed in a vehicle capable of automatic driving, the subject including a planimetric feature of a road, a signal, or a sign;
acquiring respectively items of data from a plurality of sensors provided for the subject or an object near the subject, the items of data being sensed respectively by the plurality of sensors, the object including a planimetric feature, a human, or a vehicle; and
determining, through a convolutional neural network, whether a recognition result of the subject based on the image is abnormal or not by using respectively the items of data.

Appendix 9. The information processing method according to claim 8, wherein
the acquiring the image includes acquiring position information on the vehicle,
the acquiring respectively the items of data includes acquiring position information on the plurality of sensors, and
the determining includes determining whether the recognition result of the subject is abnormal or not by using respectively the items of data transmitted from the plurality of sensors having the position information specified, based on the position information on the vehicle.

## Claims

1. An information processing method, performed by at least one processor in an information processing apparatus, comprising:
acquiring an image including a subject from an imaging apparatus;
acquiring respectively items of data from a plurality of sensors provided for the subject or an object near the subject, the items of data being sensed respectively by the plurality of sensors;
acquiring a determination result on whether the subject is abnormal or not by inputting the items of data acquired from the plurality of sensors to a learning model utilizing a neural network, wherein the learning model has learned presence or absence of an anomaly in the subject by using respectively past items of data from the plurality of sensors as learning data; and
determining whether a recognition result of the subject based on the image is abnormal or not by using the determination result.

2. The information processing method according to claim 1, wherein the determining includes determining whether the recognition result is abnormal or not by using ensemble learning on the determination result.

3. An information processing apparatus including at least one processor, the at least one processor executing:
acquiring an image including a subject from an imaging apparatus;
acquiring respectively items of data from a plurality of sensors provided for the subject or an object near the subject, the items of data being sensed respectively by the plurality of sensors;
acquiring a determination result on whether the subject is abnormal or not by inputting the items of data acquired from the plurality of sensors to a learning model utilizing a neural network, wherein the learning model has learned presence or absence of an anomaly in the subject by using respectively past items of data from the plurality of sensors as learning data; and
determining whether a recognition result of the subject based on the image is abnormal or not by using the determination result.

4. A computer-readable non-transitory storage medium for storing a program,
the program causing one or a plurality of processors in an information processing apparatus to execute:
acquiring an image including a subject from an imaging apparatus;
acquiring respectively items of data from one or a plurality of sensors provided for the subject or an object near the subject, the items of data being sensed respectively by the one or a plurality of sensors;
acquiring a determination result on whether the subject is abnormal or not by inputting, from among items of data acquired from the sensors, corresponding data to each learning model that has learned presence or absence of an anomaly in the subject by using respectively past items of data from the sensors as learning data; and
determining whether a recognition result of the subject based on the image is abnormal or not by using the determination result.
